# EUROPÄISCHE PATENTSCHRIFT

(11) **EP 1 012 119 B1**
(45) Veröffentlichungstag und Bekanntmachung des Hinweises auf die Patenterteilung: **09.11.2005**
(21) Anmeldenummer: 98941329.9
(22) Anmeldetag: 14.07.1998
(51) Int. Cl.: C02F 1/32, B01D 29/23, B01D 29/27

(54) **EINRICHTUNG ZUM ENTKEIMEN UND FILTRIEREN VON WASSER, WELCHES EINE SANITÄREINRICHTUNG DURCHSTRÖMT**
DEVICE FOR DEGERMINATING AND FILTERING WATER PASSING THROUGH A SANITARY DEVICE
DISPOSITIF PERMETTANT DE DEGERMER ET DE FILTRER L'EAU QUI S'ECOULE PAR UN EQUIPEMENT SANITAIRE

(30) Priorität: 22.08.1997 DE 19736632
(43) Veröffentlichungstag der Anmeldung: 28.06.2000
(73) Patentinhaber: HANSA METALLWERKE AG, 70567 Stuttgart (DE)
(72) Erfinder: KUNKEL, Horst, D-70499 Stuttgart (DE)
(74) Vertreter: Ostertag, Reinhard
(86) Internationale Anmeldenummer: PCT/EP1998/004374
(87) Internationale Veröffentlichungsnummer: WO 1999/010283

(56) Entgegenhaltungen:
- DE-A- 3 247 747
- FR-A- 2 545 473
- US-A- 3 551 091
- US-A- 4 857 204

## Beschreibung

Die Erfindung betrifft eine Einrichtung zum Entkeimen und Filtrieren von Wasser, welches eine Sanitäreinrichtung durchströmt, nach dem Oberbegriff des Hauptanspruches.

In den letzten Jahren sind die Gefahren, die von mit Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher eine erhöhte Bedeutung beigemessen. In diesem Zusammenhang wurde von Versuchen berichtet, strömendes Wasser durch die Bestrahlung mit UV-Licht zu entkeimen, dessen Wellenlänge geeignet ist, im Wasser mitgeführte Mikroorganismen abzutöten. Zur Verzögerung der Verweilzeit dieser Mikroorganismen im Bereich der UV-Lampe wurden Filtervorrichtungen eingesetzt, von denen die Mikroorganismen zurückgehalten wurden. Die bekannten Filtervorrichtungen bestanden allerdings aus Feststoffen und wiesen einen verhältnismäßig geringen Wirkungsgrad auf. Bereits nach geringem Eindringen in das Material dieser Filtervorrichtungen waren die Einzeller für das UV-Licht nicht mehr zugänglich. Außerdem stellten diese bekannten Filtervorrichtungen eine erhebliche Drosselung für den Wasserstrom dar.

Aus der US 2 551 091 A ist eine Entkeimungs- und Filtrierungseinrichtung der eingangs genannten Art bekannt. Bei dieser bestehen allerdings weder der Filtertuchsack noch der diesen haltende Stützkäfig aus UV-Licht leitendem Material.

Aufgabe der vorliegenden Erfindung ist es, eine Einrichtung der eingangs genannten Art anzugeben, bei welcher die Wirksamkeit des Filtervorganges selbst und die Effektivität der Entkeimung durch die UV-Strahlung verbessert ist.

Diese Aufgabe wird durch die im Anspruch 1 angegebene Erfindung gelöst.

Mit der vorliegenden Erfindung werden somit zwei Gedanken zusammengeführt: Zum einen besteht das Filtermaterial nicht mehr aus Feststoffen, die zu ihrer mechanischen Stabilität eine erhebliche Mindestdicke aufweisen müssen und außerdem eine verhältnismäßig kleine effektive Filteroberfläche zur Verfügung stellen, sondern aus einem gewirktem oder gewebtem Kunststofftuch. Dieses erhält durch den erfindungsgemäß vorgesehenen Stützkäfig eine solche Form, daß es den ganzen Leuchtkörper der UV-Lampe umgeben kann. Das Filtertuch kann verhältnismäßig dünn sein; es ist leicht und mechanisch stabil und läßt sich gegebenenfalls auch problemlos auswechseln. Der zweite erfinderische Gedanke, mit dem die Effektivität der UV-Strahlung deutlich weiter verbessert wird, besteht darin, das Material, aus dem der Filtertuchsack und Stützkäfig bestehen, für das von der UV-Lampe ausgesandte Licht durchlässig zu machen. Dies hat den Vorteil, daß auch tiefer im Filtertuch liegende Mikroorganismen vom UV-Licht erreicht und abgetötet werden können. Bei geeigneter Materialwahl kann sogar erreicht werden, daß Filtertuchsack und Stützkäfig als "Lichtleiter" für das von der UV-Lampe ausgesandte Licht dienen, welche dieses Licht konzentriert in die von der UV-Lampe entfernteren Bereiche der Filtervorrichtung führt.

Vorteilhaft ist, wenn der Filtertuchsack mehrfach in radialer Richtung gefaltet ist. Hierdurch wird die effektive Filteroberfläche weiter vergrößert, was eine Standzeitverlängerung und eine geringere Drosselung bedeutet.

Besonders bevorzugt wird dabei diejenige Ausführungsform, bei welcher der Filtertuchsack aus einzelnen Bahnen zusammengesetzt ist, die an ihren einander zugewandten Rändern so flächig miteinander verbunden sind, daß die Stirnflächen freiliegen und zum Leuchtkörper der UV-Lampe zeigen. In diesem Falle kann nämlich das von der UV-Lampe ausgestrahlte Licht an den Stirnflächen mit hoher Effektivität in das Material des Filtertuchsackes eintreten.

Eine mögliche Ausgestaltung des Stützkäfiges besteht darin, daß dieser eine Mehrzahl von radial ausgerichteten Rippen umfaßt, die an einem Ende kuppelartig miteinander verbunden sind und an deren Innenkonturen der Filtertuchsack abgestützt ist. Auf diese Weise entsteht preiswert ein hochstabiles Gebilde, welches gegebenenfalls zum Austauschen leicht aus der Einrichtung entnommen werden kann.

Die Rippen sollten eine Innenkontur aufweisen, die zumindest über eine gewisse Strecke hinweg parallel zum Leuchtkörper der UV-Lampe verläuft. Hierduch ist gewährleistet, daß das an der Innenkontur der Rippen festgelegte Material des Filtertuchsackes von dem UV-Licht überall gut erreicht wird.

Eine alternative Ausgestaltung des Stützkäfiges besteht darin, daß dieser aus stabartigem Material geformt ist.

Am preiswertesten ist es, wenn der Stützkäfig aus Kunststoffseilen gebildet ist, die über ein im Gehäuse befindliches Teil gespannt sind. Der Stützkäfig ist in diesem Falle nicht mehr von Hause aus formstabil sondern erhält seine "tragende" bzw. "abstützende" Funktion erst dann, wenn die Seile nach der Montage der Filtervorrichtung innerhalb des Gehäuses der Einrichtung gespannt sind.

Besonders kostengünstig ist es, wenn das fragliche, im Gehäuse befindliche Teil, über welches die Kunststoffseile gespannt sind, der Leuchtkörper der UV-Lampe ist. Auf diese Weist paßt.sich die gesamte Filtervorrichtung ohne besondere Zusatzmaßnahmen der Form der UV-Lampe an.

Montagetechnisch ist diejenige Ausgestaltung der Filtervorrichtung besonders günstig, bei welcher der Filtertuchsack an dem Stützkäfig mit Befestigungsklips festgelegt ist. Diese Ausführungsform ermöglicht gegebenenfalls auch, ausschließlich den Filtertuchsack auszutauschen, wenn dieser nach einer bestimmten Betriebsdauer mit Verunreinigungen vollgesetzt ist.

Ausführungsbeispiele der Erfindung werden nachfolgend anhand der Zeichnung näher erläutert; es zeigen
- Figur 1: einen Axialschnitt durch eine Einrichtung zum Entkeimen und Filtrieren von Wasser, die in einer Sanitärarmatur untergebracht werden kann;
- Figur 2: einen Schnitt gemäß Linie II-II von Figur 1;
- Figur 3: einen Schnitt gemäß Linie III-III von Figur 1;
- Figur 4: eine erste Möglichkeit, die radial nach innen zeigenden Kanten der Filtervorrichtung auszugestalten, die in der Einrichtung von Figur eingesetzt werden kann;
- Figur 5: eine zweite Möglichkeit einer derartigen Ausgestaltung.

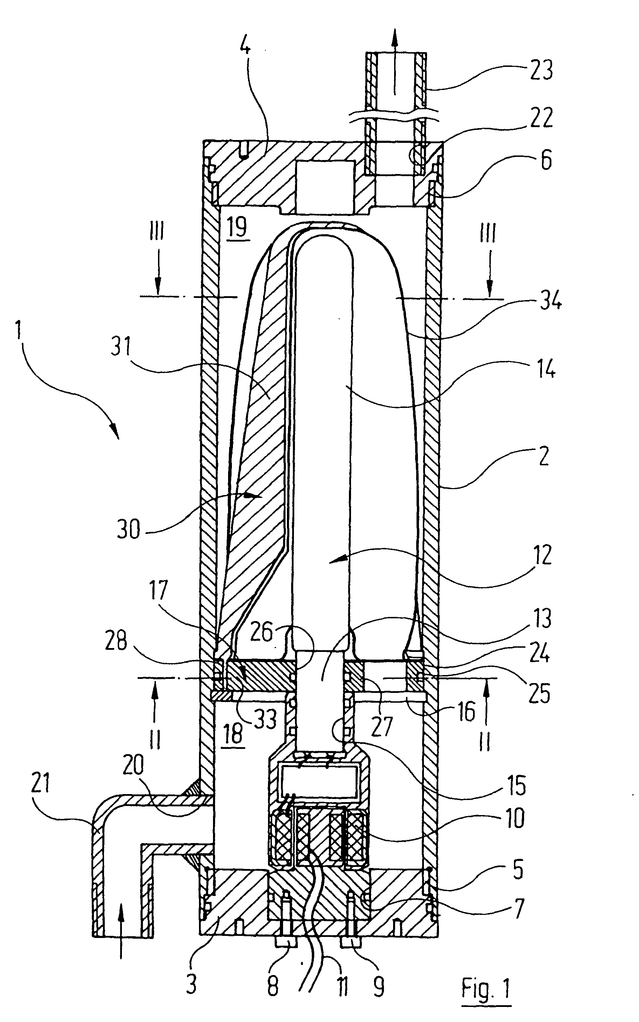

Die in Figur 1 dargestellte Einrichtung zur Entkeimung und Filtrierung von Wasser ist dazu bestimmt, in einen Wasserkanal einer sanitären Armatur eingesetzt zu werden. Alle Abmessungen sind also derart, daß sie in einem solchen Durchströmungskanal Platz finden. Die Einrichtung, die insgesamt mit dem Bezugszeichen 1 gekennzeichnet ist, umfaßt ein im wesentlichen zylindrisches Gehäuse 2, welches an den gegenüberliegenden Stirnseiten durch einen Boden 3 und einen Deckel 4 verschlossen ist. Die Verbindung zwischen dem Gehäuse 2 und dem Boden 3 bzw. dem Deckel 4 geschieht bei dem dargestellten Ausführungsbeispiel mit Hilfe von Gewinden 5, 6, so daß der Innenraum des Gehäuses 2 nach Abnehmen dieser Bauteile zugänglich ist.

In einer Ausnehmung 7 an der Innenseite des Bodens 3 ist mit Hilfe von Schrauben 8, 9 ein Anschlußsockel 10 befestigt, welcher der Aufnahme einer langgestreckten UV-Lampe 12 dient. Der Anschlußsockel 10 ist beim dargestellten Ausführungsbeispiel mehrteilig ausgestaltet und enthält verschiedene elektronische Komponenten, die der elektrischen Versorgung und Steuerung der UV-Lampe 12 dienen und im vorliegenden Zusammenhang ohne Interesse sind. Ein Versorgungskabel 11 ist in geeigneter, hier nicht interessierender Weise aus dem Gehäuse 2 bzw. durch den Boden 3 hindurch ausgeführt und dient der elektrischen Stromzufuhr.

Die UV-Lampe 12 ist in einem dem elektrischen Anschluß dienenden Sockelbereich 13 und in einen Leuchtkörper 14 unterteilt. Der Sockelbereich 13 ist in die Aufnahmeöffnung 15 des am Boden 3 befestigten Anschlußsockels 10 lösbar eingeführt. Der Leuchtkörper 14 ist als zylindrischer Stab ausgestaltet und erstreckt sich koaxial zum zylindrischen Gehäuse 2 bis in die Nähe des Deckels 4.

Mit Hilfe eines Sprengringes 16, der in einer Nut an der Innenfläche des zylindrischen Gehäuses 2 einrasten kann, ist im Innenraum des Gehäuses 2 eine Zwischenplatte 17 fixiert, welche den Innenraum des Gehäuses 2 in einen Zuströmraum 18 und in einen Behandlungsraum 19 unterteilt. Der Zuströmraum 18 umgibt im wesentlichen den mit dem Boden 3 verbundenen Anschlußsockel 10, während der Behandlungsraum 19 den Leuchtkörper 14 der UV-Lampe 12 umgibt.

In einer seitlichen, das zylindrische Gehäuse 2 durchsetzenden Öffnung 20 ist ein abgewinkelter Anschlußstutzen 21 eingeschweißt, welcher der Zufuhr von Wasser in den Zuströmraum 18 innerhalb des Gehäuses 2 dient. Im Deckel 4 ist eine achsparallele Bohrung 22 vorgesehen, in welche ein Auslaufstutzen 23 eingeschraubt ist, über welche das gereinigte Wasser die Einrichtung 1 wieder verläßt.

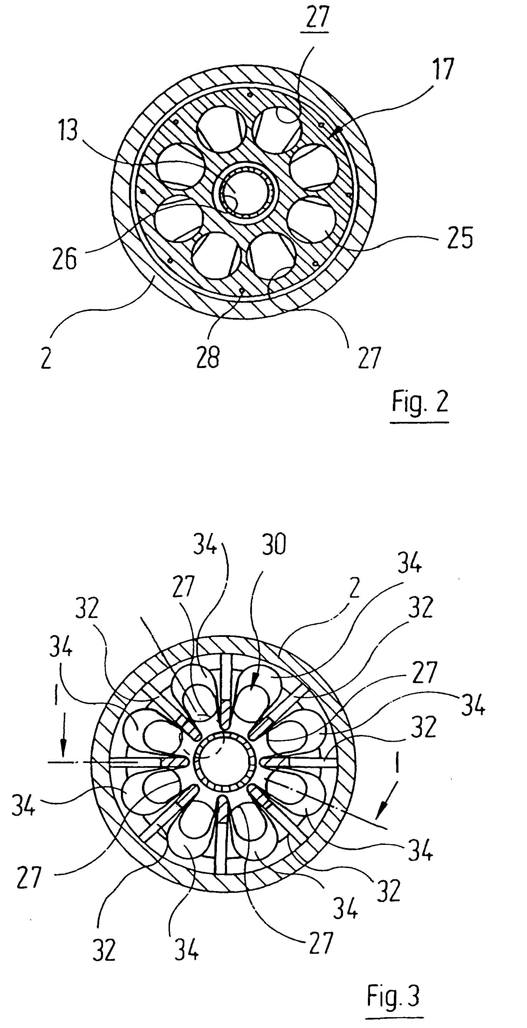

Die genaue Bauweise der Zwischenplatte 17 ist der Figur 2 zu entnehmen, welche einen Schnitt gemäß Linie II-II von Figur 1 darstellt. Es ist zu erkennen, daß die Zwischenplatte 17 in ihrer zylindrischen Mantelfläche 24 eine Ringnut 25 aufweist, in welche ein (nicht dargestellter) Dichtungsring bei Bedarf eingesetzt werden kann. Die Zwischenplatte 17 enthält eine mittige Aufnahmeöffnung 26, durch welche in Figur 1 von oben her der Sockelbereich 13 der UV-Lampe 12 hindurchgeschoben werden kann. Eine Mehrzahl von Durchströmungsöffnungen 27, die auf einem die Aufnahmeöffnung 26 umgebenden Kreis liegen, verbindet den Zuströmraum 18 mit dem Behandlungsraum 19 innerhalb der Einrichtung 1. Ebenfalls auf einem Kreis, jedoch nahe am Außenrand der Zwischenplatte 17 liegend, ist in letztere eine Mehrzahl von Befestigungsöffnungen 28 eingearbeitet, die einen verhältnismäßig kleinen Durchmesser aufweisen und der Befestigung einer Filtervorrichtung dienen, die insgesamt mit dem Bezugszeichen 30 versehen ist.

Der genaue Aufbau dieser Filtervorrichtung 30 ist den Figuren 1 und 3 zu entnehmen.

Die Filtervorrichtung 30 umfaßt einen Stützkäfig 31 sowie einen von diesem getragenen Filtertuchsack 34.

Der Stützkäfig 31 der Filtervorrichtung 30 besteht bei dem in den Figuren 1 bis 4 dargestellten Ausführungsbeispiel aus einer Mehrzahl plattenförmiger, "flossenartiger" Rippen 32, die radial auf die Achse des Gehäuses 2 ausgerichtet sind. All diese Rippen 32 sind an ihrem unteren, der Zwischenplatte 17 zugewandten Ende mit einer spitzen Haltefahne 33 versehen, welche in eine entsprechende Befestigungsöffnung 28 der Zwischenplatte 17 eingeschoben ist.

Der Stützkäfig 31 ist aus einem Kunststoffmaterial hergestellt, der UV-Licht verhältnismäßig verlustfrei leiten kann bzw. für dieses Licht durchlässig ist.

Die radial äußere Kontur der einzelnen Rippen 32 des Stützkäfiges 31 ist so geformt, daß sie mit zunehmendem Abstand von der Zwischenplatte 17 einen größeren Abstand vom zylindrischen Gehäuse 2 der Einrichtung 1 einhält; die genaue Formgebung in diesem Bereich ist jedoch unerheblich. Die radial innere Kontur der Rippen 32, die zu dem Leuchtkörper 14 der UV-Lampe 12 zeigt, verläuft vom oberen "kuppelartigen" Ende des Stützkäfiges 1 zunächst verhältnismäßig nahe parallel an dem Leuchtkörper 14 und weicht dann über eine Schräge radial nach außen bis auf etwa den Durchmesser zurück, in dem sich die Befestigungsfahnen 33 befinden.

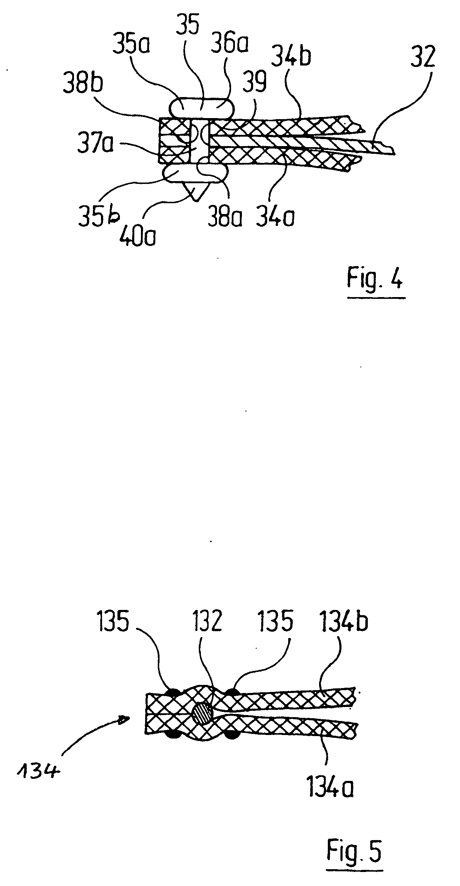

Der Filtertuchsack 34 ist ein gewobenes oder gewirktes textiles Flächengebilde aus einem Material, welches ebenfalls für UV-Licht durchlässig ist, bzw. dieses leitet. Der Filtertuchsack 34 ist aus einzelnen Bahnen 34a, 34b so zusammengesetzt, wie dies der Figur 3 und der Figur 4 zu entnehmen ist. Jeweils zwischen den innenliegenden Rändern der Rippen 32 erstrecken sich im Durchmesser U-förmige Bahnen 34a, 34b ,... des Filtertuchsackes 34, die mit ihren Rändern an dem radial inneren Rand der Rippen 32 des Stützkäfiges 31 so festgelegt sind, wie dies der Figur 4 zu entnehmen ist: der Rand der einen Bahn 34a ist flächig an die eine Seite der entsprechenden Rippe 32, der Rand der benachbarten Bahn 34b flächig an die gegenüberliegende Seite der Rippe 32 angelegt. Auf diese Weise entsteht eine ausgeprägte "Falte" des Filtertuchsackes 34, die von der entsprechenden Rippe 32 des Stützkäfiges 31 "in Form" gehalten wird. Die Anordnung ist offensichtlich so, daß die Stirnflächen der beiden Bahnen 34a und 34b sowie der Rippe 32 freiliegen und nach innen zum Leuchtkörper 14 der UV-Lampe 12 zeigen.

Die Ränder der beiden Bahnen 34a und 34b sind an der Rippe 32 durch Kunststoffklips 35 festgehalten. Diese Kunststoffklips 35 bestehen aus einem ersten Teil 35a mit einem vergrößerten, außenliegenden Kopf 36a, einem Schaft 37a, der durch fluchtende Bohrungen 38a, 38b der Bahnen 34a, 34b sowie eine hiermit fluchtende Bohrung 39 der Rippe 32 hindurchgeführt ist, sowie eine im Durchmesser gegenüber dem Schaft 37a vergrößerte Verriegelungsspitze 40a. Der zweite Teil 35b des Kunststoffklips 35 besitzt etwa die Form des Kopfes 36a des ersten Teiles 35a und weist eine Durchgangsbohrung auf, die etwas größer als der Durchmesser des Schaftes 37a des ersten Teils 35a, jedoch etwas kleiner als der größte Durchmesser der Verriegelungsspitze 40a ist. Auf diese Weise kann die Verriegelungsspitze 40a unter elastischer Kompression durch die Durchgangsbohrung des zweiten Teiles 35b des Kunststoffklips hindurchgeführt werden, wonach sie wieder auffedert und so eine Rastverbindung bewirkt.

Die oben beschriebene Einrichtung 1 arbeitet wie folgt:

Wird der Sanitäreinrichtung, beispielsweise einer Auslaufarmatur, in deren Durchströmungskanal die Einrichtung 1 eingebaut ist, geöffnet, so fließt Wasser über den Anschlußstutzen 21 in den Zuströmraum 18 innerhalb des Gehäuses 2 ein. Die UV-Lampe 12 wird eingeschaltet. Das in den Zuströmraum 18 gelangte Wasser fließt von dort weiter über die Durchströmungsöffnungen 27 in der Zwischenplatte 17 in den Behandlungsraum 19 und zwar auf der radial innenliegenden Seite des Filtertuchsacks 34. Das Wasser durchtritt diesen Filtertuchsack 34, wobei die in ihm enthaltenen auszufiltrierenden Teilchen, insbesondere aber Mikroorganismen wie Amöben und ähnliche Einzeller, von dem Filtertuchsack 34 zurückgehalten werden. Das so gereinigte Wasser gelangt in den außerhalb des Filtertuchsackes 34 liegenden Teil des Behandlungsraumes 19 und fließt aus diesem durch den Auslaßstutzen 23 ab und zum Auslauf der Sanitäreinrichtung.

Beim Durchgang durch die Behandlungskammer 19 ist das Wasser den desinfizierenden Strahlen der UV-Lampe 12 ausgesetzt. Die in dem Filtertuchsack 34 abgeschiedenen Mikroorganismen werden unter dem Einfluß der UV-Strahlung zuverlässig abgetötet. Die Wirkung dieser UV-Strahlung reicht aufgrund der UV-Durchlässigkeit bzw. UV-Leitfähigkeit weit in das Material des Filtertuchsacks 34 hinein, so daß dort auch tieferliegende Mikroorganismen erfaßt und getötet werden können. Die lichtleitende Wirkung von Filtertuchsack 34 und Rippen 32 des Stützkäfiges 31 wird durch die in Figur 4 dargestellte Ausbildung der "Falten" im Filtertuchsack 34 noch verstärkt: an den stumpf abgeschnittenen, radial nach innen zum Leuchtkörper 14 der UV-Lampe 12 zeigenden Stirnflächen dieser Teile kann das UV-Licht gut unter geringer Reflexion eintreten und sich von dort lichtleiterartig weiter fortpflanzen.

Beim oben beschriebenen Ausführungsbeispiel bestand der Stützkäfig aus den verschiedenen, im oberen Bereich kuppelartig miteinander verbundenen Rippen 32. Bei einem anderen Ausführungsbeispiel der Erfindung sind diese Rippen durch Rundstäbe ersetzt, welche die Form der Faltung in ähnlicher Weise vorgeben, wie dies beim Ausführungsbeispiel der Figuren 1 bis 4 die Innenkontur der Rippen 32 tat. In Figur 5 ist die Ausgestaltung des Randbereiches einer Faltung eines Filtertuchsackes 134 für diesen Fall dargestellt: die beiden Bahnen 134a und 134b des Filtertuchsackes 134 sind so flächig aneinander angelegt, daß sie das Rundmaterial 132 aus UV-leitendem Kunststoff umschließen und daß ihre Stirnflächen wie beim Ausführungsbeispiel von Figur 4 frei in Richtung auf den Leuchtkörper der UV-Lampe zeigen. Beidseits des Rundmateriales 132 sind Kunststoffklips 135 vorgesehen, welche die in Figur 5 dargestellte Anordnung fixieren.

Ein drittes Ausführungsbeispiel ist in der Zeichnung nicht dargestellt: Bei diesem wird der Stützkäfig durch Kunststoffseile, die mit dem Material des Filtertuchsackes vernäht sind, zusammen mit dem Filtertuchsack über den Leuchtkörper der UV-Lampe gestülpt und mit einem geschlitzten Ring, der das offene Ende der Filtervorrichtung bildet, verklemmt.

## Patentansprüche

1. Einrichtung zum Entkeimen und Filtrieren von Wasser, welches eine Sanitäreinrichtung durchströmt, mit
a) einem Gehäuse (2), welches einen Einlaß (21) und einen Auslaß (23) für das Wasser aufweist;
b) einer in dem Gehäuse (2) angeordneten Filtervorrichtung (30), die von dem Wasser auf dem Weg zwischen dem Einlaß (21) und dem Auslaß 23) des Gehäuses (2) durchtreten werden muß;
c) einer UV-Lampe (12), die innerhalb des Gehäuses (2) angeordnet ist und deren Strahlung auf das durchströmende Wasser und auf die Filtervorrichtung (30) gerichtet ist;
wobei die Filtervorrichtung (30) umfaßt:
d) einen Filtertuchsack (34) aus gewirktem oder gewebtem Kunststoffmaterial;
e) einen Stützkäfig (31), welcher dem Filtertuchsack (34) eine bestimmte Form gibt;
wobei
f) die Filtervorrichtung (30) den Leuchtkörper (14) der UV-Lampe (12) umgibt;
**dadurch gekennzeichnet, daß**
g) das Kunststoffmaterial, aus dem der Filtertuchsack (3₄) hergestellt ist, und das Kunststoffmaterial, aus dem der Stützkäfig (31) hergestellt ist, für UV-Licht durchlässig, insbesondere UV-Licht-leitend sind.

2. Einrichtung nach Anspruch 1, **dadurch gekennzeichnet,**
**daß** der Filtertuchsack (34) mehrfach in radialer Richtung gefaltet ist.

3. Einrichtung nach Anspruch 2, **dadurch gekennzeichnet,**
**daß** der Filtertuchsack (34) aus einzelnen Bahnen (34a, 34b) zusammengesetzt ist, die an ihren einander zugewandten Rändern so flächig miteinander verbunden sind, daß die Stirnflächen freiliegen und zum Leuchtkörper (14) der UV-Lampe (12) zeigen.

4. Einrichtung nach einem der vorhergehenden Ansprüche,
**dadurch gekennzeichnet, daß** der Stützkäfig (31) eine Mehrzahl von radial ausgerichteten Rippen (32) umfaßt, die an einem Ende kuppelartig miteinander verbunden sind und an deren radial inneren Kontouren der Filtertuchsack (34) abgestützt ist.

5. Einrichtung nach Anspruch 4, **dadurch gekennzeichnet,**
**daß** die Rippen (32) eine radial innere Kontour aufweist, die zumindest über eine gewisse Strecke hinweg parallel zum Leuchtkörper (14) der UV-Lampe (12) verläuft.

6. Einrichtung nach einem der Ansprüche 1 bis 3, **dadurch**
**gekennzeichnet, daß** der Stützkäfig aus stabartigem Material geformt ist.

7. Einrichtung nach einem der Ansprüche 1 bis 3, **dadurch**
**gekennzeichnet, daß** der Stützkörper aus Kunststoffseilen gebildet ist, die über ein im Gehäuse befindliches Teil gespannt sind.

8. Einrichtung nach Anspruch 7, **dadurch gekennzeichnet,**
**daß** das im Gehäuse befindliche Teil der Leuchtkörper der UV-Lampe ist.

9. Einrichtung nach einem der vorhergehenden Ansprüche,
**dadurch gekennzeichnet, daß** der Filtertuchsack (34) an dem Stützkäfig (31) mit Befestigungsklips (35) festgelegt ist.

## Claims

1. Device for sterilizing and filtering water flowing through a sanitary appliance, having
a) a housing (2), which comprises an inlet (21) and an outlet (23) for the water;
b) a filtering apparatus (30), which is disposed in the housing (2) and through which the water travelling between the inlet (21) and the outlet (23) of the housing (2) has to pass;
c) a UV lamp (12), which is disposed inside the housing (2) and the radiation of which is directed towards the water flowing through and towards the filtering apparatus (30);
wherein the filtering apparatus (30) comprises:
d) a filter cloth bag (34) made of knitted or woven plastic material;
e) a supporting cage (31), which lends the filter cloth bag (34) a specific shape;
wherein
f) the filtering apparatus (30) surrounds the luminous element (14) of the UV lamp (12);
**characterized in that**
g) the plastic material from which the filter cloth bag is made and the plastic material from which the supporting cage (34) is made is transparent for UV light and, in particular, is conductive for UV light.

2. Device according to claim 1, **characterized in that**
the filter cloth bag (34) is folded a plurality of times in radial direction.

3. Device according to claim 2, **characterized in that**
the filter clotz bag (34) is composed of indivual webs (34a, 34b), which at their edges directed towards one another are connected in a two-dimensional manner to one another in such a way that the end faces are exposed and point towards the luminous element (14) of the UV lamp (12).

4. Device according to one of the preceding claims,
**characterized in that** the supporting cage (31) comprises a plurality of radially aligned ribs (32), which at one end are connected in a cupola-like manner to one another and against the radially inner contours of which the filter cloth bag (34) is supported.

5. Device according to claim 4, **characterized in that**
the ribs (32) have a radially inner contour which, at least over a specific distance, extends parallel to the luminous element (14) of the UV lamp (12).

6. Device according to one of claims 1 to 3, **characterized**
**in that** the supporting cage is formed from rod-like material.

7. Device according to one of claims 1 to 3, **characterized**
**in that** the supporting body is formed from plastic ropes, which are stretched over a part situated in the housing.

8. Device according to claim 7, **characterized in that**
the part situated in the housing is the luminous element of the UV lamp.

9. Device according to one of the preceding claims,
**characterized in that** the filter cloth bag (34) is fastened to the supporting cage (31) by means of fastening clips (25).

## Revendications

1. Dispositif pour stériliser et filtrer l'eau qui s'écoule par un équipement sanitaire, avec
a) un boîtier (2), qui présente une admission (21) et une évacuation (23) pour l'eau ;
b) un dispositif de filtration (30), qui est disposé dans le boîtier (2) et qui doit être traversé par l'eau sur le chemin entre l'admission (21) et l'évacuation (23) du boîtier (2) ;
c) une lampe (12) à rayons ultraviolets, qui est disposé à l'intérieur du boîtier (2) et dont le rayonnement est dirigé sur l'eau qui s'écoule et sur le dispositif de filtration (30) ;
le dispositif de filtration (30) comprenant :
d) un sac (34) de toile filtrante en matériau synthétique tricoté ou tissé ;
e) une cage de soutien (31), qui donne au sac (34) de toile filtrante une forme déterminée ;
sachant que
f) le dispositif de filtration (30) entoure l'élément lumineux (14) de la lampe (12) à rayons ultraviolets ;
**caractérisé en ce que**
g) le matériau synthétique à partir duquel est fabriqué le sac (34) de toile filtrante et le matériau synthétique à partir duquel est fabriquée la cage de soutien (31) laissent passer la lumière ultraviolette, notamment sont conducteurs pour la lumière ultraviolette.

2. Dispositif selon la revendication 1, **caractérisé en ce que** le sac (34) de toile filtrante est plié plusieurs fois en direction radiale.

3. Dispositif selon la revendication 2, **caractérisé en ce que** le sac (34) de toile filtrante est composé de bandes individuelles (34a, 34b) qui, sur leurs bords en vis-à-vis, sont mutuellement assemblées à plat de telle sorte que les faces terminales sont dégagées et sont dirigées vers l'élément lumineux (14) de la lampe (12) à rayons ultraviolets.

4. Dispositif selon l'une des revendications précédentes, **caractérisé en ce que** la cage de soutien (31) comprend une pluralité de nervures (32) orientées radialement, qui sont mutuellement assemblées à une extrémité à la manière d'une coupole et sur les contours radialement intérieurs desquelles est soutenu le sac (34) de toile filtrante.

5. Dispositif selon la revendication 4, **caractérisé en ce que** les nervures (32) présentent un contour radialement intérieur qui, au moins sur une certaine distance, s'étend parallèlement à l'élément lumineux (14) de la lampe (12) à rayons ultraviolets.

6. Dispositif selon l'une des revendications 1 à 3, **caractérisé en ce que** la cage de soutien est formée d'un matériau du genre tige.

7. Dispositif selon l'une des revendications 1 à 3, **caractérisé en ce que** le corps de soutien est formé de cordes de matériau synthétique qui sont tendues sur un élément se trouvant dans le boîtier.

8. Dispositif selon la revendication 7, **caractérisé en ce que** l'élément se trouvant dans le boîtier est l'élément lumineux de la lampe à rayons ultraviolets.

9. Dispositif selon l'une des revendications précédentes, **caractérisé en ce que** le sac (34) de toile filtrante est fixé en position sur la cage de soutien (31) par des clips de fixation (35).
